# FASCICULE DE BREVET EUROPEEN

(11) **EP 1 336 827 B1**
(45) Date de publication et mention de la délivrance du brevet: **20.07.2011**
(21) Numéro de dépôt: 03290333.8
(22) Date de dépôt: 11.02.2003
(51) Int. Cl.: G01H 3/08, G01H 1/06

(54) **Procédé d'identification d'une source d'un signal**
Verfahren zur Identifizierung einer Signalquelle
Method for identifying a signal source

(30) Priorité: 18.02.2002 FR 0201996
(43) Date de publication de la demande: 20.08.2003
(73) Titulaire: Airbus Operations, 31060 Toulouse (FR)
(72) Inventeur: Ramillon, Pierre, 31490 Brax (FR); Collorec, Luc, 31000 Toulouse (FR); Cassan, Henri, 31170 Tournefeuille (FR)
(74) Mandataire: Santarelli

(56) Documents cités:
- GB-A- 2 234 353
- US-A- 4 122 432
- US-A- 4 751 657
- US-A- 6 076 405
- US-B1- 6 173 074

## Description

La présente invention concerne un procédé d'identification d'un signal, tel par exemple une source sonore ainsi qu'un dispositif pour la mise en oeuvre de ce procédé.

Un procédé selon l'invention a pour but d'identifier l'origine d'un bruit parasite (ou autre signal) dans une machine. Il peut s'agir par exemple d'un avion, d'un véhicule roulant (automobile, camion, autocar, ...), d'une machine industrielle fixe, etc....

De tels procédés n'existent à priori pas encore. Actuellement, dans le cas d'un avion, l'identification de bruits parasites est réalisée soit avant la livraison de l'avion par le constructeur, soit lorsque l'avion est exploité par une compagnie aérienne et qu'un bruit parasite apparaît. Un tel bruit est un bruit perceptible au cours d'un vol et présentant un niveau sonore inacceptable et anormal. Pour identifier ce bruit, un spécialiste en acoustique et en aéronautique intervient et effectue des vols d'essais afin d'identifier la source du bruit parasite. Grâce à ses connaissances et à son expérience, l'expert identifie les sources des bruits parasites qu'il entend. Ce mode opératoire "manuel" et empirique est efficace mais est d'un prix de revient élevé.

Dans un domaine proche de la présente invention, on peut par exemple citer les documents EP-0 297 729, EP-1 122 626 ou US 6 076 405 qui révèlent des procédés travaillant à partir d'un enregistrement sonore. Dans ces trois documents, on cherche à déterminer si une pièce d'une machine, par exemple un roulement, est ou non défectueux. Il n'est pas question ici de rechercher la source sonore d'un bruit a priori inconnu mais de déterminer si un bruit émis par une source sonore connue comporte ou non des anomalies.

La présente invention a alors pour but de fournir un procédé permettant d'identifier une source, notamment une source sonore, sans intervention d'un spécialiste.

A cet effet, elle propose un procédé d'identification d'une source d'un signal, dans lequel le signal est enregistré puis analysé afin de déterminer son spectre.

Selon l'invention, ce procédé comporte en outre les étapes suivantes :
a) parallèlement à l'enregistrement du signal, des paramètres significatifs des conditions dans lesquelles l'enregistrement a été réalisé sont mémorisés,
b) après analyse du signal et détermination de son spectre, détection de raies émergeant du bruit de fond du signal avec un seuil d'émergence prédéterminé,
c) comparaison de chaque raie détectée avec tout ou partie d'un ensemble de signatures de sources identifiées et répertoriées dans une base de données établie avant l'enregistrement,
d) pour chaque raie, sélection éventuelle de signatures pouvant correspondre à cette raie, et en fonction des couples signature/raie formés, réalisation d'une consolidation, d'une désambiguïsation ou d'une quantification de la source correspondant à la raie,
la consolidation d'un couple signature/raie étant éventuellement réalisée au cas où une seule signature est sélectionnée pour cette raie et comportant les étapes suivantes :
C1) variation d'un paramètre de mesure,
C2) comparaison d'un enregistrement correspondant à ce paramètre modifié avec l'enregistrement initial,
C3) si le signal a été modifié comme prévu dans la signature retenue en variant le paramètre, la signature est définitivement retenue pour cette raie, sinon une quantification de la source correspondant à la raie est réalisée,
la désambiguïsation correspondant au cas où plusieurs signatures sont sélectionnées pour une raie et/ou au cas où une même signature est sélectionnée pour plusieurs raies, et comportant les étapes suivantes :
D1) variation d'un paramètre de mesure,
D2) comparaison d'un enregistrement correspondant à ce paramètre modifié avec l'enregistrement initial et analyse de la modification du signal,
D3) recherche des couples signature/raie vérifiant une modification conforme à la modification constatée,
D4) si un seul couple signature/raie vérifie la modification relevée, cette signature est retenue pour la raie en question, si plusieurs couples signature/raie vérifient cette modification, la désambiguïsation est recommencée en modifiant un autre paramètre, et si aucun couple signature/raie ne vérifie cette modification, une quantification de la source correspondant à la raie est réalisée,
la quantification d'une source correspondant à une raie étant réalisée au cas où aucune signature n'est sélectionnée pour cette raie et comportant les étapes suivantes :
Q1) comparaison de la raie avec un plus grand nombre de signatures dans le cas où la première comparaison n'a porté que sur une partie des signatures de la base de données,
Q2) dans le cas où une signature est alors trouvée, réalisation éventuellement d'une étape de consolidation ou de désambiguïsation selon le nombre de signatures trouvées, et
Q3) réalisation éventuelle de mesures complémentaires avec des paramètres différents dans le cas contraire.

Un tel procédé d'identification permet dans la plupart des cas d'identifier les sources de signaux enregistrés. Bien entendu, il convient au préalable de bien renseigner la base de données contenant les signatures répertoriées.

Ce procédé présente l'avantage de pouvoir être automatisé, à l'aide par exemple d'un micro-ordinateur, et peut alors être mis en oeuvre sans nécessiter l'intervention d'un spécialiste en acoustique ou en traitement du signal.

Lors d'une consolidation ou d'une désambiguïsation le choix du paramètre de mesure à faire varier est réalisé de préférence automatiquement en fonction des caractéristiques de la (des) signature(s) sélectionnée(s). Ceci peut être réalisé à l'aide d'un logiciel qui choisit un paramètre en fonction de la (des) signature(s) sélectionnée(s). Le paramètre choisi est un paramètre qui, lorsqu'il est modifié, influe sur le signal émis par la source supposée.

Dans une forme de réalisation avantageuse d'un procédé d'identification selon l'invention, plusieurs enregistrements en différents endroits sont réalisés simultanément. De cette manière on dispose de mesures réalisées exactement dans les mêmes conditions à des endroits différents. Lorsqu'on dispose alors de telles mesures, il est avantageux, lors d'une consolidation ou d'une désambiguïsation, que le premier paramètre modifié soit l'endroit où la mesure a été effectuée.

Pour la mise en oeuvre du procédé selon l'invention, les signatures enregistrées dans la base de données comportent avantageusement des indications sur la plage de fréquences du signal émis par la source correspondante, sur les conditions dans lesquelles apparaît le signal émis par la source correspondante et aussi sur les effets d'une variation d'un ou de plusieurs paramètres sur le signal émis par cette source. Ces dernières informations sont notamment utiles pour les étapes de consolidation et de quantification.

Dans un procédé d'identification selon l'invention, le signal enregistré subit par exemple une transformation de Fourier de type FFT pour aboutir par pondération et moyennage à un spectre unique.

Il est également possible de prévoir qu'un spectre non pondéré est généré et qu'avant réalisation d'une pondération, une correction de l'effet de piquet de clôture est réalisée. Une correction de type densité spectrale de puissance (PDS) peut également être appliquée aux émergences de raies du spectre.

L'effet de piquet de clôture (ou en anglais picket fence effect ou P.F.E.) est dû au fait que le spectre de type FFT est un spectre discret donnant des informations uniquement à des fréquences données qui dépendent du réglage des paramètres de la transformation de Fourier réalisée. Le spectre réel du signal analysé peut présenter des pics à des fréquences se trouvant entre les lignes du spectre FFT. Ainsi, les pics du spectre FFT ne se trouvent pas exactement à la bonne fréquence. C'est ce que l'on appelle l'effet piquet de clôture. Cette appellation imagée est une comparaison : regarder un spectre FFT est comparé à regarder une chaîne de montagnes à travers une clôture. Une correction de type densité spectrale de puissance permet de corriger les erreurs dues à cet effet de piquet de clôture. Ce type de correction peut s'appliquer pour tous types de mesures. En effet, la densité spectrale de puissance est un terme générique employé sans se soucier de la grandeur physique représentée dans le temps. On réalise alors la moyenne des carrés des valeurs de la partie de cette grandeur qui passe par un filtre à bande étroite de fréquence centrale donnée, par unité de largeur de bande, lorsque cette largeur de bande tend vers zéro et le temps vers l'infini.

Afin d'identifier rapidement des harmoniques d'une raie, à l'étape b) du procédé d'identification selon l'invention, la détection des raies émergentes est de préférence réalisée dans le sens croissant des fréquences.

Le procédé d'identification selon l'invention est par exemple appliqué à la détection de signaux à l'intérieur d'un moyen de transport, tel par exemple un avion en vol. Dans ce dernier cas, les paramètres enregistrés à l'étape a) sont avantageusement des paramètres de vol de l'avion comprenant entre autres la vitesse de l'avion, son altitude, sa phase de vol (montée, croisière ou descente) et le régime des moteurs.

Pour la détection de bruits parasites à l'intérieur d'un avion en vol, l'enregistrement du signal est de préférence réalisé durant une phase de vol stabilisée sur une durée comprise entre 5 et 30 secondes.

Le procédé selon l'invention peut être appliqué à la détection de bruits parasites en provenance d'une source sonore. Il peut aussi être par exemple utilisé pour la détection de vibrations.

La présente invention concerne également un aéronef, caractérisé en ce qu'il comporte un dispositif d'identification d'une source d'un signal présentant au moins un capteur, des moyens pour enregistrer le signal reliés à chaque capteur de manière à pouvoir enregistrer séparément les signaux reçus par chaque capteur, et des moyens de traitement et d'analyse du signal pour la mise en oeuvre d'un procédé selon l'invention.

Dans un tel aéronef, le dispositif d'identification d'une source d'un signal possède avantageusement une alimentation en énergie électrique propre, indépendante du réseau électrique de l'aéronef. Les moyens ainsi mis en oeuvre pour l'identification des sources des signaux sont entièrement indépendants de l'aéronef et ceci limite les risques que ces moyens influent sur les signaux enregistrés.

Les moyens de traitement et d'analyse du signal comportent par exemple un micro-ordinateur.

Dans le cas où le signal à identifier dans l'aéronef est un bruit en provenance d'une source sonore, les capteurs utilisés sont alors de préférence des microphones. Le signal à identifier peut aussi être une vibration. Dans ce cas alors, les capteurs utilisés seront par exemple des accéléromètres.

Les détails et avantages de la présente invention ressortiront mieux de la description qui suit, faite en référence au dessin schématique annexé sur lequel :
Figure 1 montre schématiquement en vue de dessus un avion (sans ses ailes),
Figure 2 représente schématiquement des premières étapes d'un procédé selon l'invention,
Figure 3 représente schématiquement une étape d'identification de raie,
Figure 4 représente schématiquement une opération de consolidation,
Figure 5 représente schématiquement une opération de quantification de source inconnue,
Figures 6 à 8 illustrent schématiquement trois cas de raies ambiguës,
Figure 9 représente schématiquement une opération de désambiguïsation, et
Figures 10 à 13 représentent des spectres de signaux enregistrés au cours de l'exécution d'un procédé selon l'invention.

La description qui suit est faite en référence à un procédé permettant de déterminer la source de bruits parasites dans une cabine d'un aéronef. Toutefois, un procédé selon l'invention peut également trouver d'autres applications. On peut songer par exemple à l'identification d'une source sonore dans un véhicule roulant, voiture ou camion, ou bien encore une identification de signaux enregistrés par un sonar en océanographie.

Dans l'exemple de réalisation d'un procédé selon l'invention appliqué à la détection de bruits parasites dans un avion, il faut tout d'abord établir une base de données regroupant les signatures des bruits caractéristiques générés par diverses sources sonores. Chaque signature porte un nom (par exemple joint porte avant gauche) et comporte quatre types d'informations : domaine d'existence de la signature, plage de fréquences, effet des variations paramétriques et redondance d'équipement. On remarque ici qu'une même source peut avoir plusieurs signatures correspondant à différents domaines d'existence.

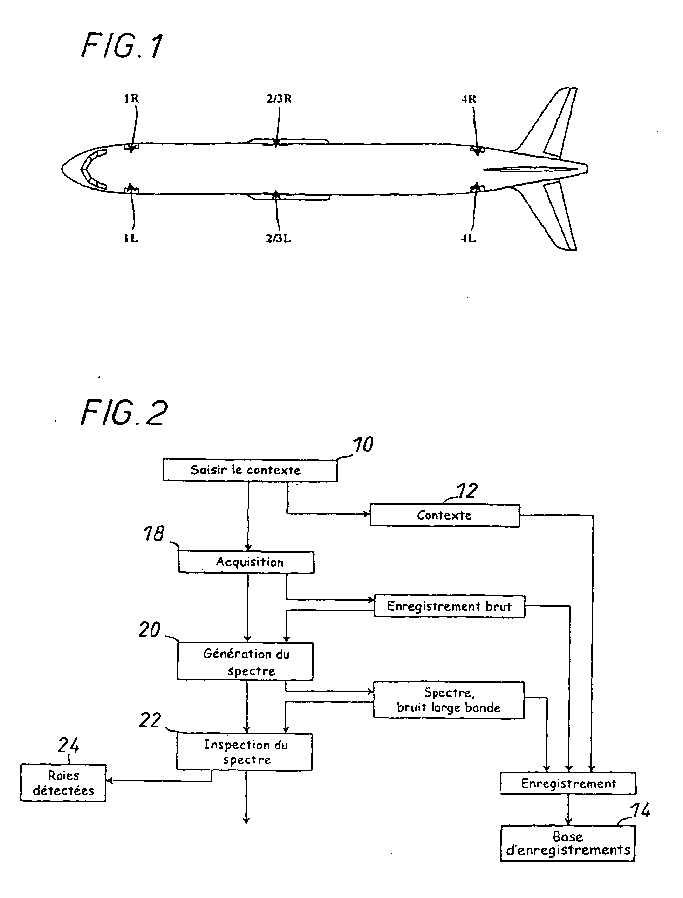

Les informations de premier type concernant le domaine d'existence de la signature sont par exemple les suivantes :
- Type d'avion.
- Position: la figure 1 représente six positions dans un avion correspondant aux endroits où des microphones seront disposés pour réaliser des mesures. Ces positions portent les références 1L, 1R, 2/3L, 2/3R, 4L et 4R. La signature indique la position privilégiée correspondant à l'endroit où le bruit parasite sera le mieux perçu.
- Phase de vol : il est indiqué ici si le bruit parasite apparaît plutôt lors de la montée de l'avion, lors de sa descente, ou lors d'un vol de croisière. Une ou plusieurs phases de vol peuvent être mentionnées dans la signature.
- N1 et N2 : la signature indique à quels régimes moteur le bruit parasite correspondant apparaît.
- Altitude (FL) : la signature comporte des indications sur les altitudes auxquelles le bruit parasite correspondant est perceptible.
- Vitesse : la plage de vitesse où le bruit parasite apparaît est indiquée.
- Ecart de pression : il s'agit de l'écart de pression entre l'extérieur et l'intérieur de la cabine auquel le bruit parasite apparaît.

Les informations d'une signature concernant la plage de fréquences seront par exemple les informations suivantes :
- Fréquence min et fréquence max correspondant à la plage de fréquences du bruit parasite émis par la source sonore correspondante.
- Harmonique : il est indiqué ici si le bruit parasite généré par la source sonore est susceptible ou non de comporter des harmoniques.

La signature comporte également des informations sur les effets des variations paramétriques. Comme type d'information, on cite à titre d'exemples non limitatifs :
- Effet de N1 sur la fréquence
- Effet de N1 sur le niveau
- Effet de N2 sur la fréquence
- Effet de N2 sur le niveau
- Effet de FL sur la fréquence
- Effet de FL sur le niveau
- Effet de la vitesse sur la fréquence
- Effet de la vitesse sur le niveau
- Effet de l'écart de pression sur la fréquence
- Effet de l'écart de pression sur le niveau

Pour chaque paramètre, on indique quel est l'effet sur la fréquence ou le niveau lorsqu'on augmente ce paramètre (N1, N2, altitude, ...). La signature indiquera alors si la fréquence ou le niveau est alors croissant, décroissant, stable, sans effet ou bien encore si l'effet est inconnu.

L'information concernant la redondance d'équipement indique si la signature présente des caractéristiques similaires à une autre signature. Dans le cas présent, on a alors par exemple pour le joint de porte avant gauche éventuellement une redondance d'équipement avec le joint de porte avant droit.

L'ensemble des signatures est regroupé dans une base de données appelée par la suite base de signatures.

La figure 2 représente schématiquement les premières étapes de l'exemple de procédé selon l'invention au cours duquel un enregistrement sonore est réalisé puis analysé. On suppose ici que la base de signatures a été préalablement établie.

Le procédé décrit ci-après est réalisé dans un avion au cours d'un vol d'essai. Dans une forme de réalisation préférée, l'avion est équipé de six microphones répartis dans la cabine de l'avion aux endroits indiqués sur la figure 1 et référencés 1L, 1R, 2/3L, 2/3R, 4L et 4R. Des microphones peuvent également être prévus dans le cockpit de l'avion. Ces microphones sont reliés à un micro-ordinateur équipé d'une carte d'acquisition adaptée. Ce micro-ordinateur comporte une alimentation en énergie électrique indépendante, c'est-à-dire qu'il n'est pas alimenté par le circuit électrique de l'avion. De cette manière, le dispositif utilisé pour mettre en oeuvre le procédé selon l'invention est totalement indépendant de l'avion dans lequel la mesure est effectuée.

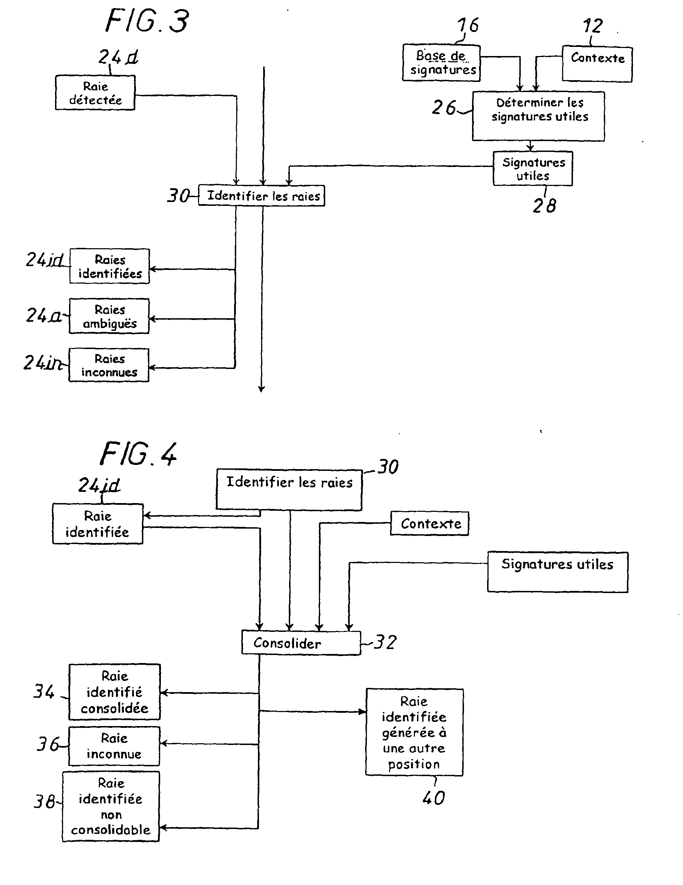

Une première étape consiste à saisir le contexte dans lequel l'enregistrement sera effectué. Les informations 12 recueillies au cours de cette saisie 10 sont enregistrées et stockées dans une base d'enregistrement 14. La base d'enregistrement 14, de même que la base de signatures 16 (figure 3), se trouve dans le micro-ordinateur.

Les informations 12 constituant le contexte dans lequel l'enregistrement est réalisé comportent par exemple une identification de l'avion (type d'avion et immatriculation de cet avion) ainsi que du vol réalisé (numéro du vol et date). Ces données sont entrées manuellement. Ces informations 12 comportent également des paramètres de vol tels le régime des moteurs (valeurs de N1 et N2), la vitesse/Mach, l'altitude, la phase de vol (montée, croisière, descente), l'écart de pression entre la cabine et l'atmosphère, etc.... Ces paramètres seront indiqués avec un maximum de précision.

La saisie 10 des informations 12 concernant le contexte est suivie d'une acquisition 18 d'un signal. Cette acquisition se fait sur une phase de vol stabilisé, c'est-à-dire avec des paramètres de vol stables, exception faite bien entendu de l'altitude lorsque l'acquisition est faite en phase de montée ou de descente. L'étape d'acquisition 18 dure quelques secondes (par exemple 10s) lorsque le bruit parasite dont on souhaite déterminer la source est établi. Chaque signal échantillonné est enregistré sur le micro-ordinateur sous forme d'un fichier de type "wave" par exemple. Une information de calibration permettant de remonter aux valeurs acoustiques réelles à partir de ce fichier wave est également enregistrée.

Immédiatement après l'acquisition 18, le signal enregistré est traité pour obtenir un spectre (étape 20). Ce spectre est une représentation de l'amplitude des composantes du son complexe enregistré en fonction de la fréquence. Pour obtenir ce spectre, le signal enregistré fait l'objet de calculs FFT (Fast Fourier Transform ou transformation de Fourier rapide) avec par exemple fenêtrage de Hanning, pondération A et moyennage des spectres obtenus afin d'aboutir à un spectre unique formé par exemple au format Microsoft Excel (marque déposée). La pondération A appliquée au spectre permet de retrouver la perception de l'oreille humaine. Un spectre non pondéré est également généré afin de procéder à une correction de l'effet de piquet de clôture. Une estimation du niveau large bande est également réalisée afin de permettre le calcul des émergences de raies. Une correction de type PDS (Power Density Spectrum ou densité spectrale de puissance) est appliquée aux émergences de raies. Il est inutile ici de décrire dans le détail les opérations de traitement effectuées car elles sont connues de l'homme du métier qui effectue des traitements du signal et d'autres opérations peuvent également être réalisées pour obtenir un spectre du signal enregistré. Le spectre au format Microsoft Excel (marque déposée) ainsi que le spectre non pondéré corrigé sont également enregistrés dans la base d'enregistrement 14.

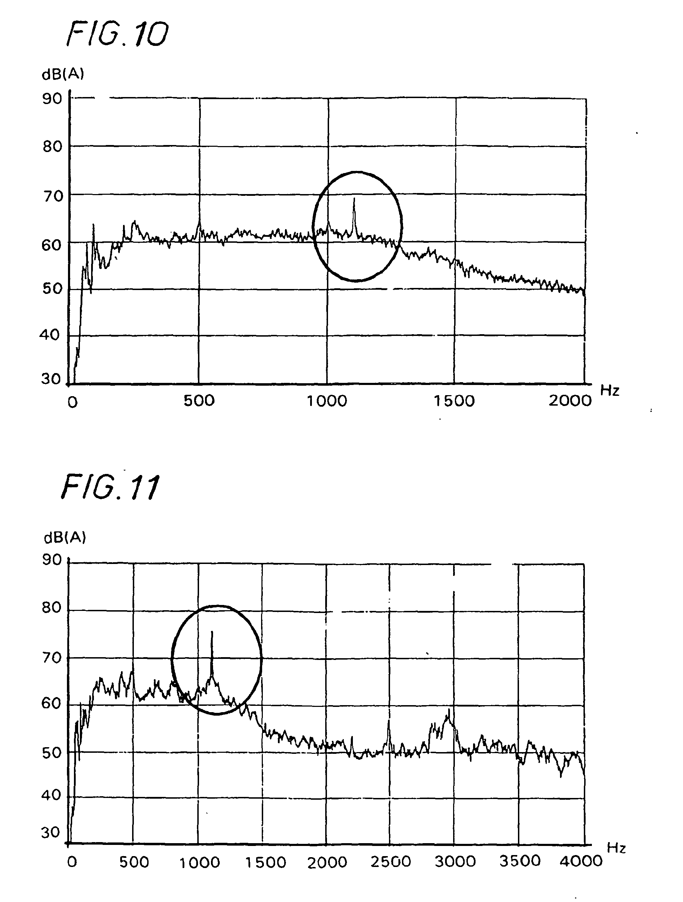

Les figures 10 à 13 sont des exemples de spectres obtenus après traitement du signal échantillonné à l'étape 18 et traité à l'étape 20. On constate sur ces figures une forme générale de la courbe représentée qui représente le bruit de fond ainsi que des pics dépassant du bruit de fond. Ces pics sont appelés raies émergentes. L'émergence (en dB) de ces raies est déterminée par comparaison du niveau au sommet de la raie avec le niveau large bande local.

L'étape suivante, d'inspection du spectre (étape 22), est destinée à identifier ces raies. Au cours de cette inspection 22, on ne s'intéresse qu'aux éléments émergeant du bruit de fond de façon significative. On définit ainsi un ou plusieurs seuils d'émergences. Par exemple, un premier seuil de présence de raie est fixé à 7dB et un second seuil, ou seuil d'anormalité, est fixé à 13dB.

Au cours de l'inspection 22, le spectre est parcouru dans le sens des fréquences croissantes afin d'extraire les raies émergentes (en tenant compte des seuils d'émergence indiqués ci-dessus). Cette extraction inclut la détection des harmoniques qui est affinée par l'utilisation de la correction de l'effet piquet de clôture sur toutes les raies ainsi que de la correction PDS. Le fait de parcourir le spectre dans le sens des fréquences croissantes permet de vérifier si une raie observée est ou n'est pas une harmonique d'une raie déjà détectée.

Pour chaque raie détectée, on notera la fréquence correspondante, l'émergence et le niveau de la raie. L'ensemble des raies détectées 24 est par exemple affiché dans l'ordre des émergences décroissantes. Les raies avec une émergence inférieure à 7dB ne seront pas affichées dans le présent exemple.

Une fois les raies détectées, il convient de les identifier pour déterminer si elles correspondent à une signature de la base de signatures 16. Pour éviter de comparer chaque raie à l'ensemble des signatures contenues dans la base de signatures 16, on choisit en fonction des informations 12 définissant le contexte dans lequel l'enregistrement a été effectué, un sous-ensemble 28 de signatures appelées par la suite signatures utiles. On ne retient alors que les signatures possibles au vu du contexte. A titre d'exemple illustratif, on ne retiendra pas les signatures correspondant à des bruits survenant à une vitesse supérieure à 300 noeuds si la vitesse au cours de l'enregistrement était inférieure à 300 noeuds.

L'étape d'identification 30 permet de comparer chaque raie détectée 24d extraite au cours de l'inspection du spectre aux signatures utiles. Dans un premier temps, l'identification est réalisée sur la base de la fréquence. A ce stade de l'identification, les raies de l'ensemble 24 des raies détectées se répartissent de la façon suivante :
- raie identifiée 24id : une seule signature existante explique cette raie, et cette signature ne correspond à aucune autre raie,
- raie ambiguë 24a : plusieurs signatures peuvent expliquer une telle raie et/ou plusieurs raies sont possibles pour une même signature, et
- raie inconnue 24in : aucune signature ne correspond à une telle raie.

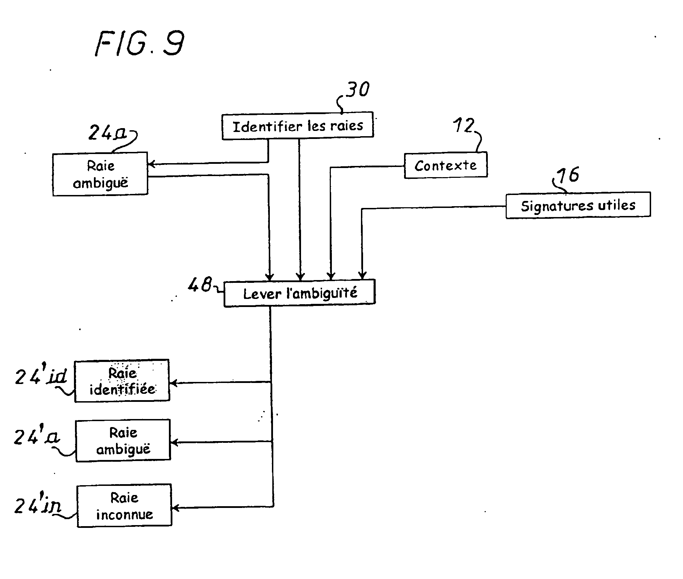

Chaque type de raie sera traité différemment. Ainsi, on procédera à une étape de consolidation (figure 4) pour une raie identifiée 24id, à une étape de quantification de source inconnue pour une raie inconnue 24in et à une étape de désambiguïsation (figure 9) pour une raie ambiguë 24a.

Deux types de consolidation peuvent être réalisés : une consolidation de position et une consolidation de comportement.

Une consolidation de position consiste à vérifier que la raie 24id observée est bien générée à la position où la mesure a été effectuée. Pour réaliser cette consolidation de position, on "libère" le paramètre position. On choisit alors toutes les signatures de sources connues générées à un autre endroit de l'avion. Parmi ces signatures, on choisit les signatures dont les plages de fréquence correspondent à la raie 24id et une mesure est effectuée à la position privilégiée de la signature. On remarque ici que lorsque six enregistrements sont réalisés simultanément, les résultats de cette mesure sont immédiatement disponibles. Si on retrouve alors la même fréquence mais avec un niveau moins élevé, alors la raie est bien générée à la position correspondant à la mesure initiale. Dans le cas contraire, si pour une même fréquence on obtient à une autre position un niveau plus élevé, alors la raie est générée à cette nouvelle position et non à celle de la mesure initiale.

Pour réaliser une consolidation de comportement, on modifie non plus la position de la mesure mais un autre paramètre du contexte. Ainsi par exemple si dans la définition de la signature, une croissance de fréquence avec la vitesse est indiquée, alors on vérifie que cette croissance a bien lieu. On réalise alors une mesure à une vitesse différente pour faire ensuite cette vérification.

L'étape de consolidation comporte une ou plusieurs étapes de consolidation de position et/ou une ou plusieurs étapes de consolidation de comportement.

Après cette étape de consolidation, la raie identifiée 24id est classée dans l'un des sous-ensembles suivants :
- raie identifiée consolidée (sous-ensemble 34) : le comportement paramétrique de la seule signature existante expliquant la raie est vérifié,
- raie inconnue (sous-ensemble 36) : le comportement attendu au vu de la signature candidate n'est pas vérifié,
- raie identifiée non consolidable (sous-ensemble 38) : aucune vérification paramétrique n'a pu être réalisée, et
- raie identifiée générée à une autre position (sous-ensemble 40).

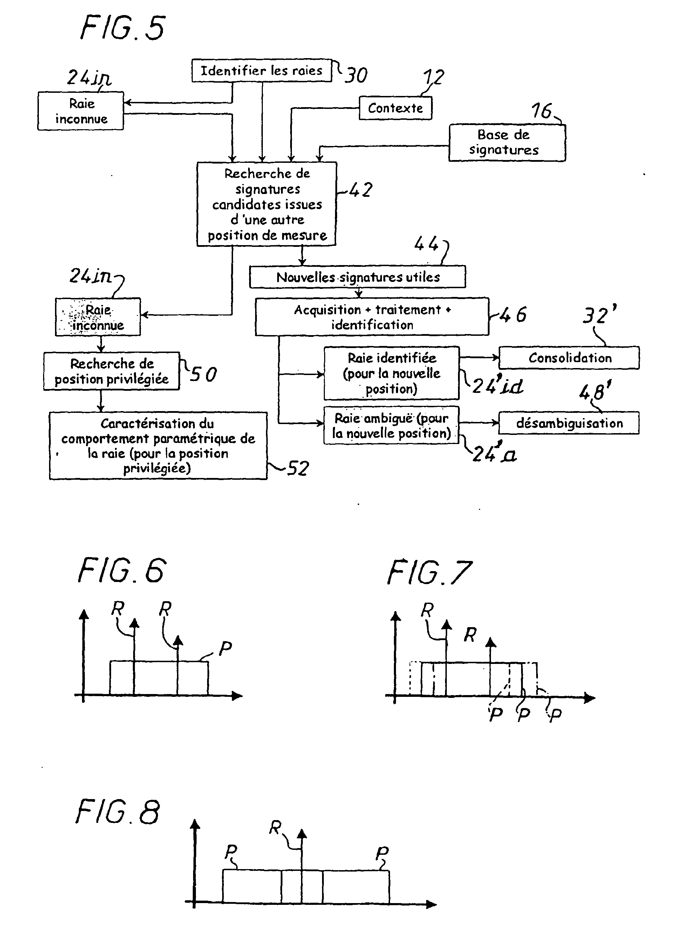

La figure 5 illustre une étape de quantification de sources inconnues. Au cours de cette quantification, une première action est de libérer le paramètre position de manière à choisir toutes les signatures de sources connues générées à un autre endroit de l'avion. On choisit alors les signatures dont les plages de fréquence correspondent à la raie inconnue (étape 42). Un nouveau sous-ensemble 44 de signatures est obtenu. Pour ces signatures, on effectue une mesure à la position privilégiée de la signature. Pour cette mesure, on effectue un traitement de signal tel qu'expliqué plus haut (étape 46). Dans ce cas, si on retrouve la même fréquence mais avec un niveau plus élevé, alors la raie inconnue est identifiée. On retrouve alors une raie 24'id qui doit être par la suite consolidée (étape 32').

A l'issue de l'étape 46, il est également possible de trouver que la raie concernée est une raie ambiguë 24'a. Pour cette raie 24'a, une étape de désambiguïsation 48' devra alors être réalisée.

Il est également possible qu'après l'opération 42 de recherche de signatures issue d'une autre position de mesure, aucune signature ne soit trouvée. La raie reste alors une raie inconnue 24in. Il convient alors de rechercher la position privilégiée de cette raie inconnue (étape 50) en recherchant pour quel point de mesure, à paramètres de vol constants, le niveau de cette raie est le plus élevé, puis dans un second temps de caractériser le comportement paramétrique de cette raie pour la position privilégiée en faisant varier un ou plusieurs paramètres de vol (étape 52). On peut ici, à la position privilégiée, réaliser une mesure en faisant varier par exemple la vitesse ou le régime des moteurs.

Les figures 6 à 8 illustrent les différents cas pour lesquels une raie est ambiguë. Dans le premier cas (figure 6), au moins deux raies R sont présentes dans une plage de fréquence P d'une même signature. Dans le second cas de figure (figure 7), les sources donnant lieu au même bruit peuvent être multiples : une ou plusieurs raies R se retrouvent dans la plage de fréquence P de plusieurs signatures. Il y a alors redondance d'équipements. Dans le troisième cas (figure 8) une raie R se trouve dans la plage de fréquence P d'au moins deux signatures.

Dans tous ces cas, il est nécessaire de procéder à une étape de désambiguïsation 48 (figure 9). Suivant les cas de figures rencontrés, il conviendra de lever l'ambiguïté par un changement de position ou par variation paramétrique.

L'ambiguïté sera levée par un changement de position, notamment dans le cas où un bruit parasite généré à une autre position que la position de mesure est suffisamment fort pour être détecté à la position de mesure. Dans ce cas, le paramètre position est libéré de manière à choisir toutes les signatures de sources connues générées à un autre endroit de l'avion. On choisit ici les signatures dont les plages de fréquence correspondent à la raie analysée et on effectue une mesure à la position privilégiée de la signature. Si on retrouve la même fréquence mais avec un niveau plus élevé, alors la raie est générée à une autre position que celle de la mesure initiale.

Pour lever l'ambiguïté par variation paramétrique, on observe le comportement fréquentiel ou de niveau lors d'une variation paramétrique. Le degré de liberté, ou paramètre, à changer est choisi automatiquement en fonction des caractéristiques comportementales des sources possibles. En effet, les signatures indiquent dans quelle mesure un paramètre agit sur la fréquence du bruit parasite émis ou sur son niveau.

Dans ce cas, le micro-ordinateur propose de réaliser une nouvelle mesure. Cette nouvelle mesure, après renseignement des informations concernant le contexte de cette mesure, est réalisée. Le spectre obtenu est analysé et comparé au(x) spectre(s) précédent(s) de façon à lever l'ambiguïté. Par exemple si une des sources possibles était sensible à la vitesse et que la comparaison entre deux spectres correspondant à des vitesses différentes ne montre aucune évolution, alors cette source peut être écartée. Inversement, si parmi les raies ambiguës, une seule présente une sensibilité au paramètre modifié et que, parmi les sources possibles, seule une est sensible à ce paramètre, alors cette source est déclarée être à l'origine de la raie.

La procédure est ainsi répétée jusqu'à ce que l'ambiguïté soit levée. En cas d'impossibilité de lever l'ambiguïté, un spécialiste en acoustique devra intervenir.

Après l'étape destinée à lever l'ambiguïté, la raie initiale ambiguë 24a devient une raie identifiée 24'id, une raie ambiguë 24'a ou une raie inconnue 24'in.

Dans le cas représenté sur la figure 6, où deux raies se trouvent dans la plage de fréquence d'une signature, l'ambiguïté devra être levée par un changement de position et/ou par variation paramétrique. Dans le cas d'une redondance d'équipements (figure 7), la procédure de désambiguïsation sera réalisée par un changement de position. Enfin, dans le troisième cas, lorsque la raie se trouve sur la plage fréquentielle de deux signatures ou plus, la procédure de désambiguïsation sera réalisée par changement de position et/ou variation paramétrique.

Bien entendu, le micro-ordinateur propose de réaliser des variations paramétriques mais celles-ci ne pourront être mises en pratique, dans le cas présent, qu'avec l'accord du pilote de l'avion. En outre, certains paramètres sont liés entre eux. Ainsi, les valeurs N1 et N2 concernant le régime moteur sont liées thermodynamiquement. De même, l'altitude et l'écart de pression entre l'intérieur et l'extérieur de la cabine sont liés.

Une fois les raies identifiées et après réalisation du processus de consolidation, de levée d'ambiguïté et de quantification, les raies identifiées au départ deviennent alors soit des raies consolidées, soit des raies identifiées, soit des raies ambiguës, soit encore des raies inconnues.

Les figures 10 et 11 illustrent un exemple de désambiguïsation. Sur la figure 10, on aperçoit à une fréquence de 1100Hz une raie correspondant à une source A. La mesure représentée sur la figure 10 a été réalisée en position 2/3L, à une altitude de 13000 pieds et à une vitesse de 320 noeuds. Cette raie correspond donc à un bruit perceptible en milieu de cabine. Toutefois, comme le montre la figure 11, i! s'agit là d'un bruit généré dans la zone arrière de la cabine. En effet, la mesure faite correspondant à la figure 11 reprend les mêmes caractéristiques sauf en ce qui concerne la position. Cette mesure a été faite au point 4L, à une altitude de 13000 pieds et à une vitesse de 320 noeuds. On remarque ici, en comparant les deux figures que le niveau de la raie est sensiblement différent (69dB sur la figure 10 et 76dB sur la figure 11). De même l'émergence est bien plus importante sur la figure 11 que sur la figure 10.

Dans la suite de la description, un exemple concret de déroulement complet d'un procédé selon l'invention est décrit.

L'avion représenté sur la figure 1 a été équipé d'un microphone associé à un enregistreur et à un micro-ordinateur. La base de signatures 16 est mémorisée dans ce micro-ordinateur sur lequel un logiciel a été installé pour permettre de mettre en oeuvre un procédé selon l'invention.

L'avion décolle pour un vol d'essai. Un opérateur renseigne des informations qui lui sont demandées par le micro-ordinateur et concernant le type de l'avion et son numéro d'immatriculation. Un bruit généré semble-t-il au niveau de la porte avant droite a été détecté et la mesure est donc effectuée en position 1R.

Les paramètres du vol sont les suivants :
Valeur de N1 : 69%
Valeur de N2 : 72%
Vitesse/Mach : 300 noeuds/Mach 0,65
Altitude : 20000 pieds
Phase de vol : croisière
Ecart de pression cabine/atmosphère : 4Psi

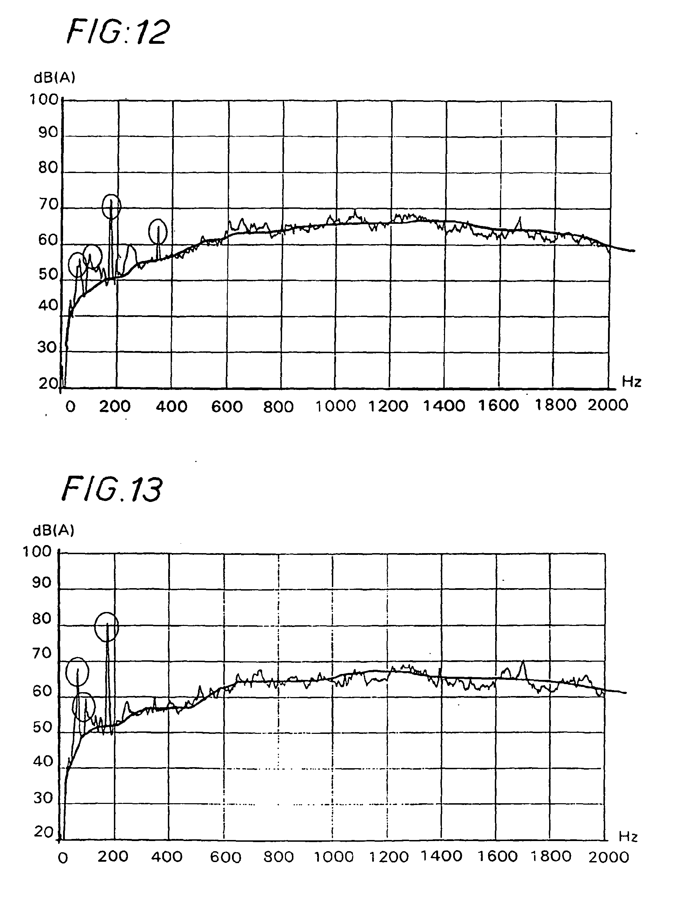

Après un enregistrement de 10s, et traitement du signal enregistré, on obtient le spectre représenté sur la figure 12. Ce spectre a été restreint à la plage de fréquence allant de 0 à 2kHz car la mesure n'a révélé aucun élément significatif au-delà de 2000Hz.

L'émergence minimale déterminée ici est de 7dB tandis que l'émergence indiquant un problème est fixée à 13dB. Dans l'ordre des fréquences croissantes, on observe sur la figure 12 les raies suivantes :
66Hz : émergence de 10dB
101Hz : émergence de 8dB
174Hz : émergence de 23dB.
Harmonique de rang 1 de la précédente raie : émergence de 10dB.

L'estimation de bruit large bande est tracée en gras sur la figure 12. Dans un souci de simplicité, les corrections PDS et d'effet de piquet de clôture n'ont pas été prises en compte ici.

Au cours de la procédure d'identification, six signatures ont été sélectionnées comme vérifiant les données du contexte. Seules trois de ces signatures seront explicitées ci-après mais toutes sont prises en compte bien entendu lors de l'analyse.

### Signature Si :

Position : 1L, 1R, 2/3L, 2/3R, 4L, 4R (bruit perceptible partout, pas de position privilégiée)

### Phase de vol : toutes

N1 : (65-70)%
N2 : tous
FL (altitude) : tous
Vitesse : toutes
Ecart de pression : tous
Fréquence min : 61Hz
Fréquence max : 66Hz
Harmoniques : non
Effet N1 sur fréquence : croissant
Effet N1 sur niveau : inconnu
Effet N2 sur fréquence : inconnu
Effet N2 sur niveau : inconnu
Effet FL sur fréquence : inconnu
Effet FL sur niveau : inconnu
Effet Vitesse sur fréquence : inconnu
Effet Vitesse sur niveau : inconnu
Effet Mach sur fréquence : inconnu
Effet Mach sur niveau : inconnu
Effet Ecart pression sur fréquence : inconnu
Effet Ecart pression sur niveau : inconnu
Redondance équipement : non
Signature S2:
Position : toutes (bruit perceptible partout, pas de position privilégiée)
Phase de vol : toutes
N1 : tous
N2 : tous
FL (altitude) : tous
Vitesse : >260Kts
Ecart de pression : tous
Fréquence min : 92Hz
Fréquence max : 120Hz
Harmoniques : possible
Effet N1 sur fréquence : inconnu
Effet N1 sur niveau : inconnu
Effet N2 sur fréquence : inconnu
Effet N2 sur niveau : inconnu
Effet FL sur fréquence : inconnu
Effet FL sur niveau : inconnu
Effet Vitesse sur fréquence : croissant
Effet Vitesse sur niveau : croissant
Effet Mach sur fréquence : croissant
Effet Mach sur niveau : croissant
Effet Ecart pression sur fréquence : inconnu
Effet Ecart pression sur niveau : inconnu
Redondance équipement : non
Signature S3 (porte avant droite).
Position : 1R
Phase de vol : croisière
N1 : tous
N2 : tous
FL (altitude) : tous
Vitesse : toutes
Ecart de pression : tous
Fréquence min : 167Hz
Fréquence max : 187HZ
Harmoniques : possible
Effet N1 sur fréquence : inconnu
Effet N1 sur niveau : inconnu
Effet N2 sur fréquence : inconnu
Effet N2 sur niveau : inconnu
Effet FL sur fréquence : inconnu
Effet FL sur niveau : inconnu
Effet Vitesse sur fréquence : inconnu
Effet Vitesse sur niveau : inconnu
Effet Mach sur fréquence : inconnu
Effet Mach sur niveau : croissant
Effet Ecart pression sur fréquence : inconnu
Effet Ecart pression sur niveau : inconnu
Redondance équipement : porte avant gauche

Au vu de ces trois signatures, et après une première analyse on a le résultat suivant :

| Raie | Nature possible | Statut |
|---|---|---|
| 66Hz (émergence de 10dB) | S1 | Identifié non consolidé |
| 101 Hz (émergence de 8dB) | S2 | Identifié non consolidé |
| 174Hz (émergence de 23dB) + harmonique de rang 1 (émergence de 10dB) | S3 | Ambiguë (redondance équipement) |

La raie présentant l'émergence la plus importante est traitée en priorité. On constate qu'il s'agit d'une raie ambiguë pour cause de redondance d'équipements. De ce fait, une nouvelle mesure est effectuée sans modifier aucun des paramètres de vol. La nouvelle mesure est effectuée au niveau de la porte avant gauche sans modifier aucun des paramètres de vol. Le contexte pour cette seconde mesure sera donc le suivant :
Position de mesure : 1L
Valeur de N1 : 69 %
Valeur de N2 : 72 %
Vitesse Mach : 300 noeuds/Mach 0,65
Altitude : 20000 pieds
Phase de vol : croisière
Ecart pression cabine/atmosphère : 4Psi

La figure 13 représente le spectre obtenu suite à cette seconde mesure. Sur cette figure, de même que sur la figure 12, l'estimation de bruit de bande large est tracée en trait gras. De même aussi, les corrections PDS et d'effet de piquets de clôture n'ont pas été prises en compte ici.

Ce nouveau spectre est inspecté et de nouvelles signatures correspondant à la porte avant gauche sont sélectionnées conduisant au tableau de résultats suivant :

| Raie | Nature possible | Statut |
|---|---|---|
| 65Hz (émergence de 20dB) | S1 | Identifié non consolidé |
| 96Hz (émergence de 9dB) | S2 | Identifié non consolidé |
| 174Hz(émergence de 31dB) | Porte avant gauche | Ambiguë (redondance équipement) |

On constate que le bruit à 174Hz est le même que celui de la porte avant droite. Le niveau sonore observé pour ce bruit est de 81dB pour la porte avant gauche contre 73dB pour la porte avant droite. On déclare donc que ce bruit est un bruit de porte avant gauche. On arrive alors au résultat suivant :

| Raie | Nature possible | Statut |
|---|---|---|
| 65Hz (émergence de 20dB) | S1 | Identifié non consolidé |
| 96Hz (émergence de 9dB) | S2 | Identifié non consolidé |
| 174Hz(émergence de 31dB) | Porte avant gauche | Identifié non consolidé |

Au vu des signatures, on constate que :
S1 est sensible à une variation du régime moteur N1
S2 est sensible à une variation de vitesse, et
Porte avant gauche est sensible à une variation de vitesse.

Etant donné que le bruit de porte avant gauche suspecté est le plus émergent, on réalise une consolidation par variation paramétrique en choisissant comme paramètre la vitesse.

Le logiciel propose une variation de vitesse de 20 noeuds allant dans le sens d'une augmentation ou d'une diminution de la vitesse. L'opérateur choisit une augmentation de vitesse et demande au pilote de porter la vitesse à 320 noeuds. Afin de pouvoir conserver les autres paramètres, l'avion se place alors en légère descente (qui sera toutefois considérée comme croisière). Il est également possible d'accepter une augmentation du régime moteur et donc de N1 et N2 en conservant une altitude constante permettant alors de réaliser une variation de N1 qui pourra être utilisée pour la consolidation de la raie à 65Hz.

Au final, S1, S2 et la porte avant gauche sont identifiées et consolidées. Les sources de bruit étant identifiées, une intervention pourra être effectuée après l'atterrissage de l'avion.

Le procédé ainsi décrit permet d'identifier automatiquement des sources de bruits parasites dans un aéronef. On comprendra aisément que ce procédé peut être adapté à la détection d'autres bruits parasites, par exemple dans un véhicule automobile, un camion ou un autocar. Des applications en dehors du domaine des transports peuvent bien entendu également être envisagées.

Le présent procédé présente l'avantage de pouvoir être mis en oeuvre sans l'intervention d'un expert en acoustique.

Dans les exemples cités, un ou plusieurs microphones et un micro-ordinateur étaient embarqués à bord d'un avion pour la réalisation d'un vol d'essai afin d'identifier l'origine des bruits parasites entendus. Il est également envisageable d'équiper un avion à demeure avec des microphones judicieusement placés. Ceux-ci facilitent alors la mise en oeuvre du procédé par la suite, notamment lorsque l'avion est en exploitation au sein d'une compagnie aérienne.

La présente invention n'est pas limitée aux formes de réalisation décrites ci-dessus à titre d'exemples non limitatifs. Elle concerne également toutes les variantes de réalisation à la portée de l'homme du métier dans le cadre des revendications ci-après.

La présente invention peut ainsi par exemple aussi être utilisée pour identifier des signaux autres que des bruits, tels par exemple des vibrations. Au lieu d'utiliser alors des microphones, des (au moins un) accéléromètres pourront être disposés à bord du véhicule correspondant.

## Revendications

1. Procédé d'identification d'une source d'un signal dans lequel le signal est enregistré puis analysé afin de déterminer son spectre, **caractérisé en ce qu'**il comporte en outre les étapes suivantes :
a) parallèlement à l'enregistrement du signal, des paramètres significatifs des conditions dans lesquelles l'enregistrement a été réalisé sont mémorisés,
b) après analyse du signal et détermination de son spectre, détection de raies émergeant du bruit de fond du signal avec un seuil d'émergence prédéterminé,
c) comparaison de chaque raie détectée avec tout ou partie d'un ensemble de signatures de sources identifiées et répertoriées dans une base de données établie avant l'enregistrement,
d) pour chaque raie, sélection de signatures pouvant correspondre à cette raie, et en fonction des couples signature/raie formés, réalisation d'une consolidation, d'une désambiguïsation ou d'une quantification de la source correspondant à la raie,
la consolidation d'un couple signature/raie étant réalisée au cas où une seule signature est sélectionnée pour cette raie et comportant les étapes suivantes :
C1) variation d'un paramètre de mesure,
C2) comparaison d'un enregistrement correspondant à ce paramètre modifié avec l'enregistrement initial,
C3) si le signal a été modifié comme prévu dans la signature retenue en variant le paramètre, la signature est définitivement retenue pour cette raie, sinon une quantification de la source correspondant à la raie est réalisée,
la désambiguïsation correspondant au cas où plusieurs signatures sont sélectionnées pour une raie et/ou au cas où une même signature est sélectionnée pour plusieurs raies, et comportant les étapes suivantes:
D1) variation d'un paramètre de mesure,
D2) comparaison d'un enregistrement correspondant à ce paramètre modifié avec l'enregistrement initial et analyse de la modification du signal,
D3) recherche des couples signature/raie vérifiant une modification conforme à la modification constatée,
D4) si un seul couple signature/raie vérifie la modification relevée, cette signature est retenue pour la raie en question, si plusieurs couples signature/raie vérifient cette modification, la désambiguïsation est recommencée en modifiant un autre paramètre, et si aucun couple signature/raie ne vérifie cette modification, une quantification de la source correspondant à la raie est réalisée,
la quantification d'une source correspondant à une raie étant réalisée au cas où aucune signature n'est sélectionnée pour cette raie et comportant les étapes suivantes :
Q1) comparaison de la raie avec un plus grand nombre de signatures dans le cas où la première comparaison n'a porté que sur une partie des signatures de la base de données,
Q2) dans le cas où une signature est alors trouvée, réalisation d'une étape de consolidation ou de désambiguïsation selon le nombre de signatures trouvées, et
Q3) réalisation de mesures complémentaires avec des paramètres différents dans le cas contraire.

2. Procédé d'identification selon la revendication 1, **caractérisé en ce que** lors d'une consolidation ou d'une désambiguïsation, le choix du paramètre de mesure à faire varier est réalisé automatiquement en fonction des caractéristiques de la (des) signature(s) sélectionnée(s).

3. Procédé d'identification selon l'une des revendications 1 ou 2, **caractérisé en ce que** plusieurs enregistrements en différents endroits sont réalisés simultanément.

4. Procédé d'identification selon la revendication 3, **caractérisé en ce que** lors d'une consolidation ou d'une désambiguïsation, le premier paramètre modifié est l'endroit où la mesure a été effectuée.

5. Procédé d'identification selon l'une des revendications 1 à 4, **caractérisé en ce que** les signatures enregistrées dans la base de données comportent des indications sur la plage de fréquences du signal émis par la source correspondante, sur les conditions dans lesquelles apparaît le signal émis par la source correspondante et aussi sur les effets d'une variation d'un ou de plusieurs paramètres sur le signal émis par cette source.

6. Procédé d'identification selon l'une des revendications 1 à 5, **caractérisé en ce que** le signal enregistré subit une transformation de Fourier de type FFT pour aboutir par pondération et moyennage à un spectre unique.

7. Procédé d'identification selon l'une des revendications 1 à 6, **caractérisé en ce qu'**un spectre non pondéré est généré et **en ce qu'**avant réalisation d'une pondération, une correction de l'effet de piquet de clôture est réalisée.

8. Procédé d'identification selon l'une des revendications 1 à 7, **caractérisé en ce qu'**une correction de type densité spectrale de puissance (PDS) est appliquée aux émergences de raies du spectre.

9. Procédé d'identification selon l'une des revendications 1 à 8, **caractérisé en ce qu'**à l'étape b) la détection des raies émergentes est réalisée dans le sens croissant des fréquences.

10. Procédé d'identification selon l'une des revendications 1 à 9, **caractérisé en ce qu'**il est appliqué à la détection de signaux à l'intérieur d'un moyen de transport.

11. Procédé d'identification selon la revendication 10, **caractérisé en ce qu'**il est appliqué à la détection de signaux à l'intérieur d'un avion en vol.

12. Procédé d'identification selon la revendication 11, **caractérisé en ce que** les paramètres enregistrés à l'étape a) sont des paramètres de vol de l'avion comprenant entre autres la vitesse de l'avion, son altitude, sa phase de vol (montée, croisière ou descente), le régime des moteurs.

13. Procédé d'identification selon l'une des revendications 11 ou 12, **caractérisé en ce que** l'enregistrement du signal est réalisé durant une phase de vol stabilisée sur une durée comprise entre 5 et 30 secondes.

14. Procédé d'identification selon l'une des revendications 1 à 13, **caractérisé en ce qu'**il appliqué à la détection de bruits parasites en provenance d'une source sonore.

15. Aéronef, **caractérisé en ce qu'**il comporte un dispositif d'identification d'une source d'un signal présentant au moins un capteur, des moyens pour enregistrer le signal reliés à chaque capteur de manière à pouvoir enregistrer séparément les signaux reçus par chaque capteur, et des moyens de traitement et d'analyse du signal adaptés pour la mise en oeuvre d'un procédé selon l'une des revendications 1 à 14.

16. Aéronef selon la revendication 15, **caractérisé en ce que** le dispositif d'identification d'une source d'un signal possède une alimentation en énergie électrique propre, indépendante du réseau électrique de l'aéronef.

17. Aéronef selon l'une des revendications 15 ou 16, **caractérisé en ce que** les moyens de traitement et d'analyse du signal comportent un micro-ordinateur.

18. Aéronef selon l'une des revendications 15 à 17, **caractérisé en ce que** le signal à identifier est un signal sonore et **en ce que** les capteurs correspondants sont des microphones.

19. Aéronef selon l'une des revendications 15 à 18, **caractérisé en ce que** le signal à identifier est une vibration et **en ce que** les capteurs correspondants sont des accéléromètres.

## Claims

1. Method of identifying a source of a signal wherein the signal is recorded and then analysed in order to determine its spectrum, which method is **characterised in that** it includes the following steps:
a) in parallel with recording the signal, storing parameters significant of the conditions under which the recording is made,
b) after analysing the signal and determining its spectrum, detecting Lines emerging from the background noise of the signal, using a predetermined emergence threshold,
c) comparing each line detected with some or all of a set of signatures of sources identified and inventoried in a database established prior to the recording,
d) for each line, selecting signatures that may correspond to said line and, as a function of the resulting signature/line pairs, consolidating, resolving ambiguity of, or quantifying the source corresponding to the line,
the signature/line pair being consolidated, if only one signature is selected for said line, by the following steps:
C1) modifying a measurement parameter,
C2) comparing a recording corresponding to the modified parameter with the original recording,
C3) if the signal is modified as predicted in the signature retained by modifying the parameter, definitively retaining the signature for said line, and if it is not, quantifying the source corresponding to the line,
the resolving of ambiguity corresponding to a plurality of signatures being selected for a line and/or the same signature being selected for more than one lire, and including the following steps:
D1) modifying a measurement parameter,
D2) comparing a recording corresponding to the modified parameter with the original recording and analysing the modification of the signal,
D3) searching for signature/line pairs verifying a modification conforming to the observed modification,
D4) if only one signature/line pair verifies the observed modification, retaining that signature for the line in question, if a plurality of signature/line pairs verifies said modification, restarting said resolving of ambiguity by modifying another parameter, and if no signature/line pair verifies said modification, quantifying the source corresponding to the line,
the source corresponding to a line being quantified if nc signature is selected for said line by the following steps:
Q1) comparing the line with a greater number of signatures if the first comparison applied to only some of the signatures from the database,
Q2) if a signature is then found, carrying out a consolidation or resolving of ambiguity step, depending on the number of signatures found, and
Q3) if not, carrying out additional measurement with different parameters.

2. Identification method according to claim 1, **characterised in that** during consolidation or resolving ambiguity, the measurement parameter to be modified is chosen automatically as a function of the characteristics of the selected signature or signatures.

3. Identification method according to claim 1 or 2, **characterised in that** a plurality of recordings is made simultaneously at different locations.

4. Identification method according to claim 3, **characterised in that** the first parameter modified during consolidation or resolving ambiguity is the location at which the measurement was taken.

5. Identification method according to any of claims 1 to 4, **characterised in that** the signatures recorded in the database include information on the range of frequencies of the signal emitted by the corresponding source, on the conditions under which the signal emitted by the corresponding source is present, and on the effects of modifying one or more parameters on the signal emitted by that source.

6. Identification method according to any of claims 1 to 5, **characterised in that** the recorded signal is processed by a fast Fourier transform to obtain a single spectrum by weighting and averaging.

7. Identification method according to any of claims 1 to 6, **characterised in that** a non-weighted spectrum is generated and a picket fence effect correction is applied prior to weighting.

8. Identification method according to any of claims 1 to 7, **characterised in that** a power density spectrum (PDS) correction is applied to the emergent lines of the spectrum.

9. Identification method according to any of claims 1 to 8, **characterised in that**, in step b), the emergent lines are detected in increasing frequency order.

10. Identification method according to any of claims 1 to 9, **characterised in that** it is applied to detecting signals inside transportation means.

11. Identification method according to claim 10, **characterised in that** it is applied to detecting signals inside an aircraft in flight.

12. Identification method according to claim 11, **characterised in that** the parameters recorded in step a) are flight parameters of the aircraft including the speed of the aircraft, its altitude, its flight phase (climb, cruising or descent), and the engine revs.

13. Identification method according to claim 11 or 12, **characterised in that** the signal is recorded during a stable flight phase over a time period from 5 to 30 seconds.

14. Identification method according to any of claims 1 to 13, **characterised in that** it is applied to detecting unwanted noises from a sound source.

15. Aircraft **characterised in that** it includes a device for identifying a source of a signal, said device including at least one sensor, means for recording the signal connected to said sensor or to each sensor to record separately the signals received by said sensor or each sensor, and signal processing and analysing means suitable for implementing a method according to any of claims 1 to 14.

16. Aircraft according to claim 15, **characterised in that** the device for identifying a source of a signal has its own electrical power supply independent of the electrical power supply network of the aircraft.

17. Aircraft according to claim 15 or 16, **characterised in that** the signal processing and analysing means include a microcomputer.

18. Aircraft according to any of claims 15 to 17, **characterised in that** the signal to be identified is a sound signal and the sensors are microphones.

19. Aircraft according to any of claims 15 to 18, **characterised in that** the signal to be identified is a vibration and the sensors are accelerometers.

## Patentansprüche

1. Verfahren zur Identifizierung einer Quelle eines Signals, bei dem das Signal gespeichert und dann analysiert wird, um sein Spektrum zu bestimmen, **dadurch gekennzeichnet, dass** es außerdem die folgenden Schritte umfasst:
a) parallel zur Aufzeichnung des Signals werden signifikante Parameter der Bedingungen, unter denen die Aufzeichnung durchgeführt wurde, gespeichert,
b) nach Analyse des Signals und Bestimmung seines Spektrums Erfassung von Linien, die aus dem Hintergrundrauschen des Signals mit einer vorbestimmten Auftauchschwelle auftauchen,
c) Vergleich jeder erfassten Linie mit der Gesamtheit oder einem Teil einer Menge von Signaturen von Quellen, die identifiziert und in einer vor der Aufzeichnung erstellten Datenbasis verzeichnet sind,
d) für jede Linie Auswahl von Signaturen, die dieser Linie entsprechen können, und in Abhängigkeit von den gebildeten Signatur/Linie-Paaren Durchführung einer Konsolidierung, einer Desambiguisierung oder einer Quantifizierung der der Linie entsprechenden Quelle,
wobei die Konsolidierung eines Signatur/Linie-Paars in dem Fall durchgeführt wird, in dem nur eine Signatur für diese Linie ausgewählt wird, und die folgenden Schritte umfasst:
C1) Änderung eines Messparameters,
C2) Vergleich einer diesem geänderten Parameter entsprechenden Aufzeichnung mit der ursprünglichen Aufzeichnung,
C3) wenn das Signal wie vorgesehen in der festgehaltenen Signatur geändert wurde, indem der Parameter geändert wurde, wird die Signatur endgültig für diese Linie festgehalten, andernfalls wird eine Quantifizierung der der Linie entsprechenden Quelle durchgeführt,
wobei die Desambiguisierung dem Fall entspricht, in dem mehrere Signaturen für eine Linie ausgewählt werden, und/oder dem Fall, in dem ein und dieselbe Signatur für mehrere Linien ausgewählt wird, und die folgenden Schritte umfasst:
D1) Änderung eines Messparameters,
D2) Vergleich einer diesem geänderten Parameter entsprechenden Aufzeichnung mit der ursprünglichen Aufzeichnung und Analyse der Änderung des Signals,
D3) Suche der Signatur/Linie-Paare, die eine Änderung gemäß der festgestellten Änderung verifizieren,
D4) wenn nur ein Signatur/Linie-Paar die festgestellte Änderung verifiziert, wird diese Signatur für die betreffende Linie festgehalten, wenn mehrere Signatur/Linie-Paare diese Änderung verifizieren, wird die Desambiguisierung wieder begonnen, indem ein anderer Parameter geändert wird, und wenn kein Signatur/Linie-Paar diese Änderung verifiziert, wird eine Quantifizierung der der Linie entsprechenden Quelle durchgeführt,
wobei die Quantifizierung einer einer Linie entsprechenden Quelle in dem Fall durchgeführt wird, in dem keine Signatur für diese Linie ausgewählt wird, und die folgenden Schritte umfasst:
Q1) Vergleich der Linie mit einer größeren Anzahl von Signaturen in dem Fall, in dem der erste Vergleich nur über einen Teil der Signaturen der Datenbasis erfolgte,
Q2) in dem Fall, in dem nun eine Signatur gefunden wird, Durchführung eines Schritts der Konsolidierung oder der Desambiguisierung je nach der Anzahl gefundener Signaturen, und
Q3) Durchführung von zusätzlichen Messungen mit anderen Parametern im entgegengesetzten Fall.

2. Identifizierungsverfahren nach Anspruch 1, **dadurch gekennzeichnet, dass** bei einer Konsolidierung oder einer Desambiguisierung die Wahl des zu ändernden Messparameters automatisch in Abhängigkeit von den Merkmalen der ausgewählten Signatur(en) vorgenommen wird.

3. Identifizierungsverfahren nach einem der Ansprüche 1 oder 2, **dadurch gekennzeichnet, dass** mehrere Aufzeichnungen an verschiedenen Stellen gleichzeitig vorgenommen werden.

4. Identifizierungsverfahren nach Anspruch 3, **dadurch gekennzeichnet, dass** bei einer Konsolidierung oder einer Desambiguisierung der erste geänderte Parameter die Stelle ist, an der die Messung durchgeführt wurde.

5. Identifizierungsverfahren nach einem der Ansprüche 1 bis 4, **dadurch gekennzeichnet, dass** die in der Datenbasis aufgezeichneten Signaturen Angaben über den Frequenzbereich des von der entsprechenden Quelle gesendeten Signals, über die Bedingungen, unter denen das von der entsprechenden Quelle gesendete Signal erscheint, und auch über die Wirkungen einer Änderung eines oder mehrerer Parameter auf das von dieser Quelle gesendete Signal umfassen.

6. Identifizierungsverfahren nach einem der Ansprüche 1 bis 5, **dadurch gekennzeichnet, dass** das aufgezeichnete Signal einer Fourier-Transformation vom Typ FFT unterzogen wird, um durch Gewichtung und Mittelung zu einem einzigen Spektrum zu kommen.

7. Identifizierungsverfahren nach einem der Ansprüche 1 bis 6, **dadurch gekennzeichnet, dass** ein nicht gewichtetes Spektrum erzeugt wird und dass vor Durchführung einer Gewichtung eine Korrektur des Zaunpfahl-Effekts vorgenommen wird.

8. Identifizierungsverfahren nach einem der Ansprüche 1 bis 7, **dadurch gekennzeichnet, dass** eine Korrektur vom Typ Leistungssprektraldichte (PSD) an die Auftauchungen von Linien des Spektrums angelegt wird,

9. Identifizierungsverfahren nach einem der Ansprüche 1 bis 8, **dadurch gekennzeichnet, dass** im Schritt b) die Erfassung der auftauchenden Linien in steigender Richtung der Frequenzen durchgeführt wird.

10. Identifizierungsverfahren nach einem der Ansprüche 1 bis 9, **dadurch gekennzeichnet, dass** es auf die Erfassung von Signalen im Inneren eines Transportmittels angewandt wird.

11. Identifizierungsverfahren nach Anspruch 10, **dadurch gekennzeichnet, dass** es auf die Erfassung von Signalen im Inneren eines Flugzeugs im Flug angewandt wird.

12. Identifizierungsverfahren nach Anspruch 11, **dadurch gekennzeichnet, dass** die im Schritt a) aufgezeichneten Parameter Flugparameter des Flugzeugs sind, die unter anderem die Geschwindigkeit des Flugzeugs, seine Höhe, seine Flugphase (Steigflug, Reiseflug oder Sirikflug), die Drehzahl der Motoren umfassen.

13. Identifizierungsverfahren nach einem der Ansprüche 11 oder 12, **dadurch gekennzeichnet, dass** die Aufzeichnung des Signals während einer stabilisierten Flugphase über eine Dauer zwischen 5 und 30 Sekunden durchgeführt wird.

14. Identifizierungsverfahren nach einem der Ansprüche 1 bis 13, **dadurch gekennzeichnet, dass** es auf die Erfassung von von einer Schallquelle kommenden Störgeräuschen angewandt wird.

15. Luftfahrzeug, **dadurch gekennzeichnet, dass** es eine Vorrichtung zur Identifizierung einer Quelle eines Signals umfasst, die mindestens einen Sensor, Mittel zum Aufzeichnen des Signals, die mit jedem Sensor verbunden sind, so dass sie die von jedem Sensor empfangenen Signale getrennt aufzeichnen können, und Mittel zur Verarbeitung und zur Analyse des Signals aufweist, die für die Durchführung eines Verfahrens nach einem der Ansprüche 1 bis 14 ausgelegt sind.

16. Luftfahrzeug nach Anspruch 15, **dadurch gekennzeichnet, dass** die Vorrichtung zur Identifizierung einer Quelle eines Signals eine eigene, von dem Stromnetz des Luftfahrzeugs unabhängige Versorgung mit elektrischer Energie besitzt.

17. Luftfahrzeug nach einem der Ansprüche 15 oder 16, **dadurch gekennzeichnet, dass** die Mittel zur Verarbeitung und zur Analyse des Signals einen Mikrorechner umfassen.

18. Luftfahrzeug nach einem der Ansprüche 15 bis 17, **dadurch gekennzeichnet, dass** das zu identifizierende Signal ein Tonsignal ist und dass die entsprechenden Sensoren Mikrophone sind.

19. Luftfahrzeug nach einem der Ansprüche 15 bis 18, **dadurch gekennzeichnet, dass** das zu identifizierende Signal eine Vibration ist und dass die entsprechenden Sensor Beschleunigungsmesser sind,
